# EUROPEAN PATENT SPECIFICATION

(11) **EP 3 476 530 B1**
(45) Date of publication and mention of the grant of the patent: **13.04.2022**
(21) Application number: 18195673.1
(22) Date of filing: 20.09.2018
(51) Int. Cl.: B23Q 3/08, B25B 11/00, F16K 31/06

(54) **MACHINE TOOL WITH AN IMPROVED SYSTEM FOR FASTENING WORKPIECES TO BE MACHINED**
WERKZEUGMASCHINE MIT EINEM VERBESSERTEN SYSTEM ZUM EINSPANNEN VON ZU BEARBEITENDEN WERKSTÜCKEN
MACHINE-OUTIL AVEC SYSTEME DE SERRAGE DE PIECES A USINER AMELIORE

(30) Priority: 31.10.2017 IT 201700123759
(43) Date of publication of application: 01.05.2019
(73) Proprietor: SCM Group S.p.A., 47921 Rimini (RN) (IT)
(72) Inventor: FERRI, Mirko, 47921 Rimini (IT)
(74) Representative: Santi, Filippo

(56) References cited:
- WO-A1-2004/108359
- DE-A1-102013 113 112
- DE-U1- 29 705 087
- US-A- 5 048 804

## Description

This invention relates to machine tool with an improved system for fastening workpieces to be machined.

More in detail, the invention relates to machine tool with an improved system for fastening workpieces to be machined, such as for example wooden panels, to the work surface of the machine tool.

The description below relates to machine tool for machining wooden panels equipped with a fastening system according to the invention, but it is quite apparent how the same should not be considered limited to this specific use, as it may also be used for machine tools for machining workpieces of different shape and type.

Normally, the work surfaces with which the machine tools for machining wooden panels are equipped are supported by a support structure of the machine tool itself consisting of a metal support surface in which is made a multitude of vertical through holes for the passage of air, each equipped with a respective valve with a valve which can be opened and closed manually by means of a screwdriver.

Grooves are formed on the upper part of the above-mentioned support surface, normally formed in the shape of a grid, in such a way that the vertical through holes are located between the various holes.

The grooves allow the positioning of linear seals inside them, to form, in this way, on the upper part of the support surface, one or more areas, that is to say, compartments, which are independent, into each of which leads one or more vertical through holes.

Above the support surface is normally rested a support panel, on which is rested, in turn, the panel to be machined.

The above-mentioned support panel normally consists of a breathable material (e.g. cork), so that it can be passed through by a flow of air.

The above-mentioned vertical through holes are also connected to a vacuum pump configured for creating a vacuum condition beneath the panels to be machined when the valves of said holes are in an open position, in such a way that both the panels to be machined and the support panel are attracted, strongly and stably, towards the supporting surface until they are completely fastened.

More specifically, when the vacuum pump is operated, a negative pressure is created in the compartments defined by the above-mentioned seals into which lead holes with the respective valve open, in such a way that the compartments in fact become fastening areas for the overlying portions of the panel to be machined.

The subdivision of the top area of the support surface into subareas, that is to say, into independent compartments, is necessary to allow the fastening, that is, the fixing of the work surface, of the workpieces obtained after cutting of the panels.

As mentioned above with reference to traditional machine tools, in order to open and close the valves associated with the through holes made in the work surface, it is necessary to intervene manually on them, if necessary with the use of a screwdriver or other tool or operating instrument.

For this reason, if, after the variation of the cutting programme of the panels, it is necessary to modify the configuration or the distribution of the active compartments, that is, of the compartments with a negative pressure, it is inevitably necessary to remove, preliminarily, the support panel positioned above the support panel in order to then be able to intervene on the valves from above, turning, in one direction or the other, the screws of the opening and closing mechanism of the valves.

As can be easily inferred, each variation of the cutting programme planned on the traditional machine tools of this type results in the execution of a process which is quite laborious and, above all, time-consuming for the relative actuation.

Particularly, a known technical solution is disclosed in the German patent document n. DE 102013113112 A1, on which the preamble of appended claim 1 is based.

In light of the above, the aim of the invention is therefore to provide a machine tool with a system for fastening workpieces to be machined which allows a high productivity level to be achieved.

Another aim of the invention is to provide a machine tool with a system for fastening workpieces to be machined which allows an efficient fastening of the workpieces and of any of their parts resulting from cutting operations to be achieved.

A further aim of the invention is to provide a machine tool with a system for fastening workpieces to be machined which allows the conditions for fastening the workpieces to be varied automatically.

Another aim of the invention is to provide a machine tool with a system for fastening workpieces to be machined which has a reduced structural complexity.

The specific object of this invention is therefore a machine tool comprising a system for fastening workpieces to be machined, said system comprising: a substantially flat support for supporting at least one workpiece to be machined, at least one opening being formed in said support; a system for generating a negative pressure connected to said at least one opening for creating a negative pressure in said at least one opening; and at least a closure member positioned at said at least one opening, said at least one closure member comprising a shutter bearing a magnetic field-sensitive element, said shutter being movable between a closed position, wherein said shutter covers said at least one opening preventing said negative pressure from reaching, in use, said at least one workpiece positioned above said support, and an open position, wherein said at least one opening is left at least partially open by said shutter allowing said negative pressure to determine, in use, the fastening of said at least one workpiece to said support, in such a way that said shutter can be moved from said closed position to said open position or from said open position to said closed position by applying, in use, remotely, a magnetic force to said magnetic field-sensitive element.

According to the invention, said machine tool comprises an operative head, which is movable, for machining workpieces; and a control member for controlling said at least one closure member, wherein said control member is configured for being mounted in said operative head and comprises a magnetic element which is able to generate a magnetic force for interacting, remotely, with said magnetic field-sensitive element of said at least one closure member.

Further, according to the invention, said magnetic field-sensitive element may consist of ferrous metal.

Again according to the invention, a plurality of grooves may be formed in said support for housing, in use, sealing elements.

Preferably, according to the invention, in said support is formed at least one recess at said at least one opening, said at least one recess being configured for housing internally said at least one closure member.

Advantageously, according to the invention, said shutter may be movable, in rotation, between said closing position and said opening position.

Preferably, according to the invention, said shutter is connected, in a rotable fashion, to said support at an end area of said shutter.

Alternatively, according to the invention, said shutter may be movable, in translation, between said closing position and said opening position.

Further, according to the invention, said at least one closure member may comprise a plate in which is formed a second opening, said plate being fixable to said support in such a way that said second opening is in communication with said at least one opening, and in that said shutter is coupled in a slidable fashion with said plate at said second opening.

Preferably, according to the invention, said machine tool comprises an inductive sensor which can be mounted in said operative head, said inductive sensor being configured in such a way that when said operative head is positioned substantially above said at least one opening, said inductive sensor detects whether said shutter is in said closing position or in said opening position.

The invention is now described, by way of example and without limiting the scope of the invention, with reference to the accompanying drawings which illustrate preferred embodiments of it, in which:
Figure 1 is a partial perspective view of a machine tool comprising a system for fastening workpieces to be machined according to the invention;
Figure 2 is a side view of the machine tool shown in Figure 1;
Figure 3 is a top plan view of the machine tool shown in Figure 1;
Figure 4 is a cross section view through the line B-B indicated in Figure 2;

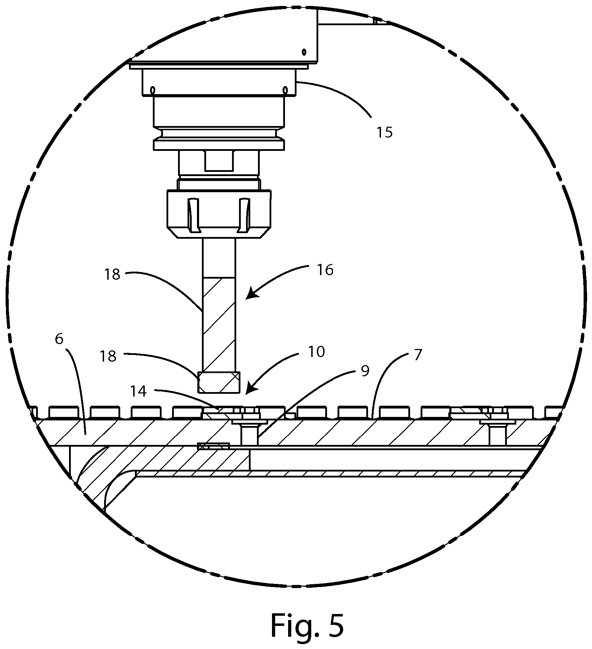

Figure 5 is a detailed view of the detail A shown in Figure 4;
Figure 6 is a detailed view of the detail C indicated in Figure 3; and
Figure 7 shows an alternative embodiment of the closure member shown in Figure 6.

In the various figures similar parts are labelled with the same reference numerals.

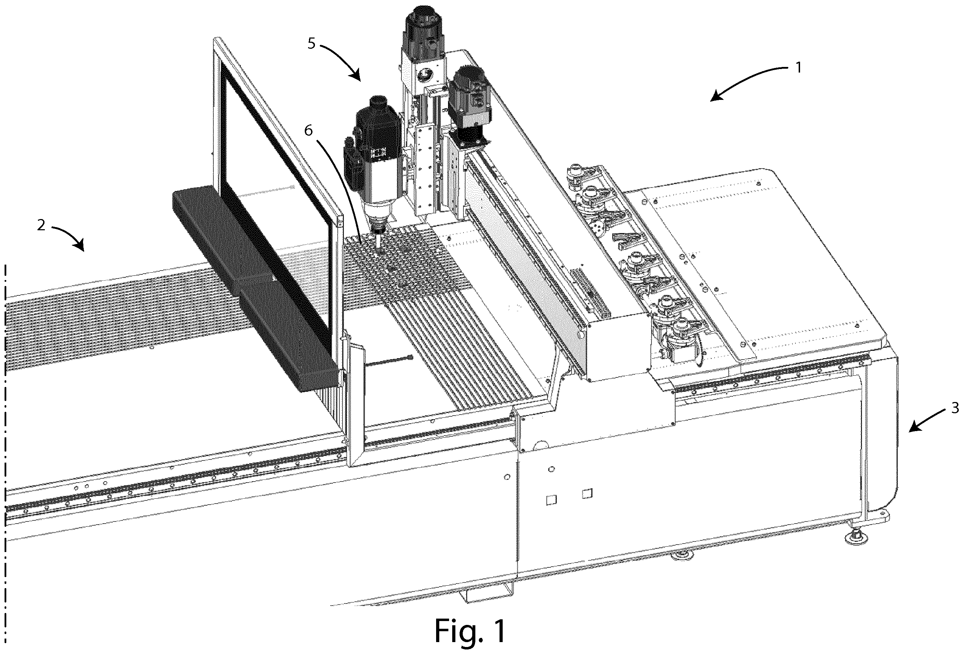

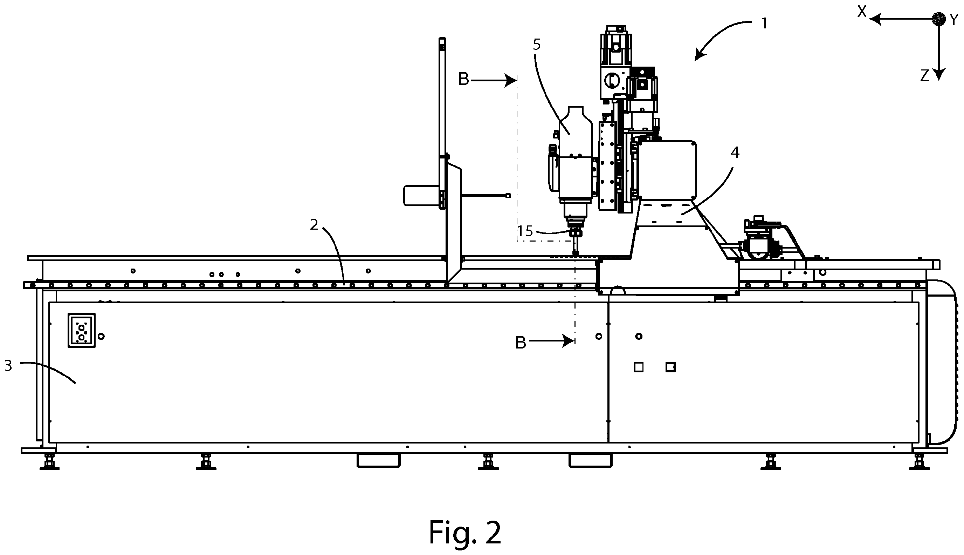

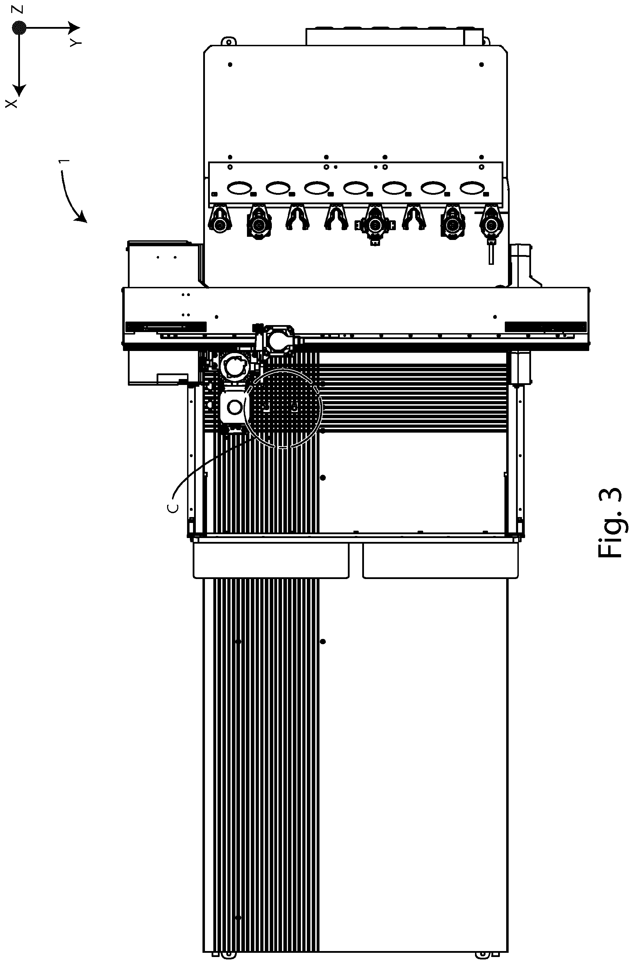

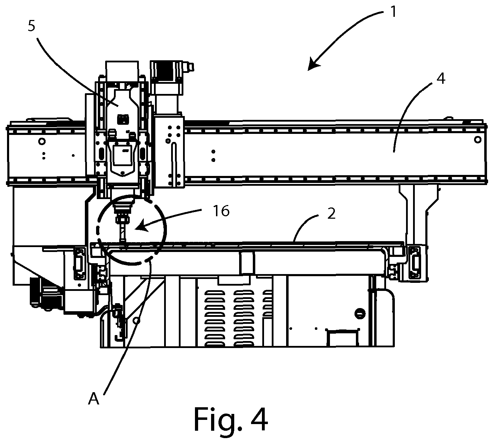

With reference to Figures 1-4, the numeral 1 denotes a machine tool for machining wooden panels.

The machine tool 1 comprises a work surface 2 supported by a base 3.

Above the work surface 2 there is, in a transversal position with respect to the latter, a portal 4 movable along the axis X, on which is enables to move, along the axes Y and Z, an operative head 5 for machining panels.

The work surface 2 in turn comprises a metal support 6, preferably made of aluminium, with a substantially flat form, on the upper face of which is made a plurality of grooves 7 formed in the shape of a grid, so as to form a plurality di raised areas 8 uniformly distributed and separated from each other by the grooves 7.

The above-mentioned support 6 may be, for example, formed by a metal sheet which in turn consists, if necessary, of a series of longitudinal elements placed alongside each other and joined together.

A plurality of through holes 9 is also formed in the support 6, communicating, below, with a system for generating a vacuum.

On the upper face of the support 6 there is also a plurality of closure members 10 which are air tight (that is, bistable valves) each positioned in a respective recess 11 at a through hole 9.

Each closure member 10 consists of a shutter 12 connected, a relative end portion, to the support 6 in a rotatable fashion by means of a screw 13, in such a way that the shutter 12 can oscillate, in rotation, between a closed position and an open position of the relative through hole 9.

A magnetic field-sensitive element 14, preferably made of ferrous material, is fixed on the upper face of each shutter 12, at an end area opposite the position of the relative screw 13.

More specifically, each closure member 10 has a height such that the relative top end is substantially flush, or lower, with respect to the top of each raised area 8, in such a way as to not protrude above the support 6, thereby allowing a stable support for the panels to be positioned on the work surface 2.

The operative head 5, on the other hand, has a spindle 15 for the mounting of tools and instruments of various types, including a control member 16 for controlling the movement of the underlying closure members 10 planned in the work surface 2.

The control member 16 has a fastening portion for the relative connection to the spindle 15 of the operative head 5.

A rod, that is, an oblong element, 18 extends vertically from the fastening portion bearing, at the relative end opposite the interface with the fastening portion a magnetic element 19.

In order to fix the panels to be machined on the work surface 2, it is necessary, firstly, to position one or more seals (not illustrated) in the grooves 7 of the support 6 about one or more through holes 9, in such a way that on the upper face of the support 6 are defined one or more areas isolated on the perimeter, delimited by the above-mentioned seals, on the basis of the work programme selected in the machine tool 1.

Subsequently, it is necessary to position on the support 6, in sequence, a support panel (not illustrated) and one or more panels to be machined (not illustrated), in such a way that said support panel is positioned between the latter and the support 6 and that a plurality of chambers is formed in the areas delimited by the above-mentioned seals.

At this point, the operative head 5 with the relative control member 16 is passed above the panel or panels to be machined, in such a way that the magnetic element 19 determines, by magnetic attraction with the elements 14 of the closure member 10, the rotation of the shutters 12 and therefore the opening or closing of the through holes 9, on the basis of the planned work programme.

In order to fix the panel or panels to be machined, mentioned above, to the work surface 2, the above-mentioned system for generating a vacuum is activated, which will determine the formation of a negative pressure in each area delimitated by the above-mentioned seals into which at least one through hole 9 leads with the relative closure member 10 in the open position.

Clearly, on the other hand, no negative pressure will be formed in the areas delimited by the seals in which there are only through holes 9 with the relative closure members 10 in the closed position, since the vacuum generated by the above-mentioned system for generating the vacuum cannot reach, evidently, these areas due to the interposing of the air tight closure members 10.

In this way, therefore, the portions of the support panel and of the panel to be machined positioned above these negative pressure areas are attracted, strongly and stably, towards the support 6 until they are completely fastened.

If it is necessary to vary the distribution of the active areas, that is, the negative pressure areas, in the work surface 2 for example following cutting operations carried out on the panels, it is possible to again pass the operative head 5 with the relative control member 16 above the panels already machined, without having to remove neither the latter nor the support panel to open or close the closure members 10 according to the methods described above, on the basis of the new operational requirements for fastening the panels.

Optionally, there may also be an inductive sensor (not illustrated) configured for detecting any presence, close to it, of a magnetic field-sensitive element 14.

The inductive sensor may be positioned directly on the control member 16 through a vertical movement system, or on another support different from the control member 16.

Thanks to the operation of the above-mentioned inductive sensor it is possible to check the actual positioning of each closure member 10 simply by mounting it on the operative head 5 and passing it above the panels to be machined positioned on the work surface 2 and, therefore, also above the underlying closure members 10 provided on the support 6.

In this way, when the inductive sensor is positioned exactly above each through hole 9, it will be able to detect whether beneath it there is present, or not, a magnetic field-sensitive element 14 which closes the through hole 9, on the basis of the intensity of the magnetic field measured by the sensor.

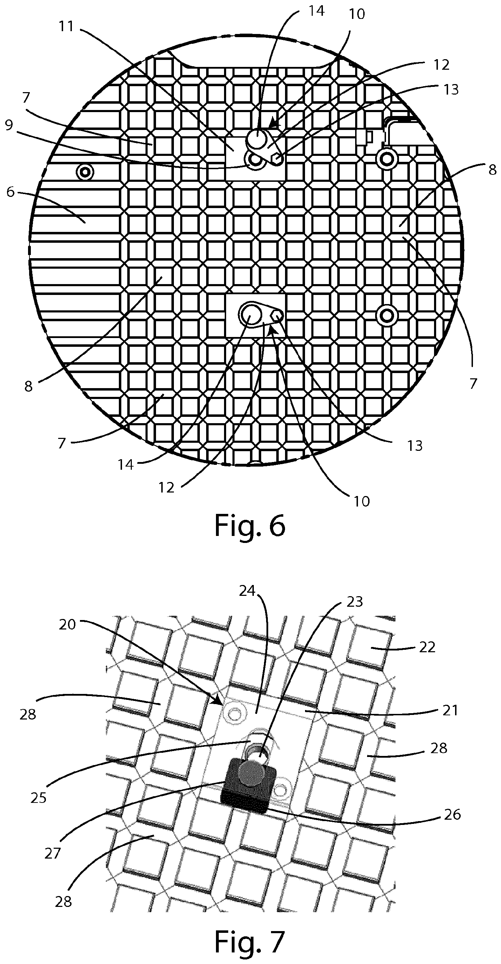

Figure 7 shows a further closure member 20, that is, a further bistable valve, which is also to be located in a corresponding recess 21 formed in a support element 22 of a work surface, at a through hole 23.

The closure member 20 comprises a plate 24 in which is formed, internally, an opening 25 communicating with the underlying through hole 23 when the plate 24 is fixed in the recess 21.

The closure member 20 also comprises a shutter 26 engaged, in a slidable fashion, on the plate 24 in such a way as to be able to move between an open position, wherein the opening 25 and the underlying through hole 23 are left open, and a closed position, wherein the opening 25 and the respective through hole 23 are covered, in an air tight fashion, by the shutter 26.

Above the shutter 26 there is also a fixed an element 27 made of magnetic field-sensitive material, preferably made of ferrous material, to allow the control member 16 mounted on the operative head 5 to arrange, similarly to what is described above, the opening or the closing of each closure member 20 by magnetic attraction.

Also in this case, a plurality of grooves 28 in the shape of a grid are formed in the upper face of the support element 22, which carry out the same function as the grooves 7 described above.

According to another embodiment of the invention, the magnetic element 19 of the control member 16 may be replaced by an electromagnet, if it is necessary to generate operating forces of a greater intensity.

As may be inferred from the above description, the system for fastening workpieces to be machined, according to the invention, allows, advantageously, the distribution of the active areas in the work surface to be modified, that is to say, the areas for fastening the panels to be machined, in an easy and fast manner, without having to remove the panels and the support panel upon each variation of the configuration of said areas.

## Claims

1. Machine tool (1) comprising a system for fastening workpieces to be machined, said system comprising:
a support (6), which is substantially flat, for supporting at least one workpiece to be machined, at least one opening (9, 23) being formed in said support (6);
a depression generation system which is connected with said at least one opening (9, 23) for generating a depression in said at least one opening (9, 23); and
at least one closure member (10, 20) which is placed at said at least one opening (9, 23), said at least one closure member (10, 20) comprising a valve element (12, 26) bearing a magnetic field-sensitive element (14, 27), said valve element (12, 26) being movable between a closing position, where said valve element (12, 26) covers said at least one opening (9, 23) while preventing said depression from reaching, in use, said at least one workpiece to be machined placed above said support (6), and an opening position, where said at least one opening (9, 23) is kept at least partially open by said valve element (12, 26) while allowing said depression to fasten, in use, said at least one workpiece to be machined to said support (6), such that said valve element (12, 26) is able to move from said closing position to said opening position or from said opening position to said closing position by applying, when in use, at a distance, a magnetic force to said magnetic field-sensitive element (14, 27);
wherein said machine tool (1) further comprises an operative head (5), which is movable, for machining workpieces, and a control member (16) for controlling said at least one closure member (10, 20), **characterised in that** said control member (16) is configured to be mounted to said operative head (5) and comprises a magnetic element (19) capable of generating a magnetic force to interact, at a distance, with said magnetic field-sensitive element (14, 27) of said at least one closure member (10, 20).

2. Machine tool (1) according to claim 1, **characterized in that** said magnetic field-sensitive element (14, 27) is made of ferrous material.

3. Machine tool (1) according to any one of the preceding claims, **characterized in that** a plurality of grooves (7) is formed in said support (6) to house, in use, sealing elements.

4. Machine tool (1) according to any one of the preceding claims, **characterized in that** at least one recess (11, 21) is formed in said support (6) at said at least one opening (9, 23), said at least one recess (11, 21) being configured to completely house said at least one closure member (10, 20).

5. Machine tool (1) according to any one of the preceding claims, **characterized in that** said valve element (12) is movable in rotation between said closing position and said opening position.

6. Machine tool (1) according to claim 5, **characterized in that** said valve element (12) is rotatably connected with said support (6) at a end region of said valve element (12).

7. Machine tool (1) according to any one of claims 1 to 4, **characterized in that** said valve element (26) is movable in translation between said closing position and said opening position.

8. Machine tool (1) according to claim 7, **characterized in that** said at least one closure member (20) comprises a plate (24) where a second opening (25) is formed, said plate (24) being fixable to said support (6) such that said second opening (25) is in communication with said at least one opening (23), and **in that** said valve element (26) is slidably coupled to said plate (24) at said second opening (25).

9. Machine tool (1) according to any one of preceding claims, **characterized in that** it comprises an inductive sensor mountable in said operative head (5), said inductive sensor being configured such that said inductive sensor detects whether said valve element (12, 26) is in said closing position or in said opening position when said operative head (5) is placed substantially above said at least one opening (9, 23).

## Patentansprüche

1. Werkzeugmaschine (1), die ein System zum Befestigen zu bearbeitender Werkstücke umfasst, wobei das System umfasst:
einen Träger (6), der im Wesentlichen flach ist, um mindestens ein zu bearbeitendes Werkstück zu tragen, wobei mindestens eine Öffnung (9, 23) in dem Träger (6) gebildet ist;
ein Unterdruckerzeugungssystem, das mit der mindestens einen Öffnung (9, 23) verbunden ist, um einen Unterdruck in der mindestens einen Öffnung (9, 23) zu erzeugen; und
mindestens ein Verschlusselement (10, 20), das an der mindestens einen Öffnung (9, 23) platziert ist, wobei das mindestens eine Verschlusselement (10, 20) ein Ventilelement (12, 26) umfasst, das ein für ein Magnetfeld empfindliches Element (14, 27) trägt, wobei das Ventilelement (12, 26) zwischen einer Schließposition, in der das Ventilelement (12, 26) die mindestens eine Öffnung (9, 23) abdeckt, während verhindert wird, dass der Unterdruck bei Verwendung das mindestens eine zu bearbeitende Werkstück, das über dem Träger (6) platziert ist, erreicht, und einer Öffnungsposition bewegbar ist, in der die mindestens eine Öffnung (9, 23) mindestens teilweise von dem Ventilelement (12, 26) offen gehalten wird, während es dem Unterdruck erlaubt wird, bei Verwendung das mindestens eine zu bearbeitende Werkstück an dem Träger (6) derart zu befestigen, dass das Ventilelement (12, 26) fähig ist, sich von der Schließposition zu der Öffnungspositionen oder von der Öffnungsposition zu der Schließposition durch Anlegen einer Magnetkraft bei Verwendung in einem Abstand an das für ein Magnetfeld empfindliche Elemente (14, 27) zu bewegen;
wobei die Werkzeugmaschine (1) weiter einen Betriebskopf (5) umfasst, der zum Bearbeiten von Werkstücken bewegbar ist, und ein Steuerelement (16) zum Steuern des mindestens einen Verschlusselements (10, 20),
**dadurch gekennzeichnet, dass** das Steuerelement (16) dazu konfiguriert ist, an den Betriebskopf (5) montiert zu sein und ein magnetisches Element (19) umfasst, das fähig ist, eine Magnetkraft zu erzeugen, um auf Entfernung mit dem für ein Magnetfeld empfindlichen Element (14, 27) des mindestens einen Verschlusselements (10, 20) in Wechselwirkung zu treten.

2. Werkzeugmaschine (1) nach Anspruch 1, **dadurch gekennzeichnet, dass** das für ein Magnetfeld empfindliche Element (14, 27) aus einem eisenhaltigen Material hergestellt ist.

3. Werkzeugmaschine (1) nach einem der vorstehenden Ansprüche, **dadurch gekennzeichnet, dass** eine Vielzahl von Nuten (7) in dem Träger (6) gebildet ist, um bei Verwendung Abdichtungselemente unterzubringen.

4. Werkzeugmaschine (1) nach einem der vorstehenden Ansprüche, **dadurch gekennzeichnet, dass** mindestens eine Vertiefung (11, 21) in dem Träger (6) an der mindestens einen Öffnung (9, 23) gebildet ist, wobei die mindestens eine Vertiefung (11, 21) dazu konfiguriert ist, mindestens ein Verschlusselement (10, 20) vollständig unterzubringen.

5. Werkzeugmaschine (1) nach einem der vorstehenden Ansprüche, **dadurch gekennzeichnet, dass** das Ventilelement (12) in Drehung zwischen der Verschlussposition und der Öffnungsposition bewegbar ist.

6. Werkzeugmaschine (1) nach Anspruch 5, **dadurch gekennzeichnet, dass** das Ventilelement (12) drehbar mit dem Träger (6) an einem Endbereich des Ventilelements (12) verbunden ist.

7. Werkzeugmaschine (1) nach einem der Ansprüche 1 bis 4, **dadurch gekennzeichnet, dass** das Ventilelement (26) in Verschiebung zwischen der Verschlussposition und der Öffnungsposition bewegbar ist.

8. Werkzeugmaschine (1) nach Anspruch 7, **dadurch gekennzeichnet, dass** das mindestens eine Verschlusselement (20) eine Platte (24) umfasst, wo eine zweite Öffnung (25) gebildet ist, wobei die Platte (24) an dem Träger (6) derart befestigbar ist, dass die zweite Öffnung (25) mit der mindestens einen Öffnung (23) in Kommunikation steht, und dass das Ventilelement (26) gleitbar an die Platte (24) an der zweiten Öffnung (25) gekoppelt ist.

9. Werkzeugmaschine (1) nach einem der vorstehenden Ansprüche, **dadurch gekennzeichnet, dass** sie einen Induktivsensor umfasst, der in dem Betriebskopf (5) installierbar ist, wobei der Induktivsensor derart konfiguriert ist, dass der Induktivsensor erfasst, ob das Ventilelement (12, 26) in der Verschlussposition oder in der Öffnungsposition ist, wenn der Betriebskopf (5) im Wesentlichen über der mindestens einen Öffnung (9, 23) platziert ist.

## Revendications

1. Machine-outil (1) comprenant un système de fixation de pièces à usiner, ledit système comprenant :
un support (6), qui est sensiblement plat, pour supporter au moins une pièce à usiner, au moins une ouverture (9, 23) étant formée dans ledit support (6) ;
un système de génération de basse pression qui est raccordé à ladite au moins une ouverture (9, 23) pour générer une basse pression dans ladite au moins une ouverture (9, 23) ; et
au moins un organe de fermeture (10, 20) qui est placé au niveau de ladite au moins une ouverture (9, 23), ledit au moins un organe de fermeture (10, 20) comprenant un élément de clapet (12, 26) portant un élément sensible au champ magnétique (14, 27), ledit élément de clapet (12, 26) étant mobile entre une position de fermeture, où ledit élément de clapet (12, 26) recouvre ladite au moins une ouverture (9, 23) tout en empêchant ladite basse pression d'atteindre, en utilisation, ladite au moins une pièce à usiner placée au-dessus dudit support (6), et une position d'ouverture, où ladite au moins une ouverture (9, 23) est gardée au moins partiellement ouverte par ledit élément de clapet (12, 26) tout en permettant à ladite basse pression de fixer, en utilisation, ladite au moins une pièce à usiner audit support (6), de sorte que ledit élément de clapet (12, 26) puisse se déplacer de ladite position de fermeture à ladite position d'ouverture ou de ladite position d'ouverture à ladite position de fermeture par application, lors de l'utilisation, à une certaine distance, d'une force magnétique audit élément sensible au champ magnétique (14, 27) ;
dans laquelle ladite machine-outil (1) comprend en outre une tête opérationnelle (5), qui est mobile, pour usiner des pièces, et un organe de commande (16) pour commander ledit au moins un organe de fermeture (10, 20),
**caractérisée en ce que** ledit organe de commande (16) est configuré pour être monté sur ladite tête opérationnelle (5) et comprend un élément magnétique (19) apte à générer une force magnétique pour interagir, à une certaine distance, avec ledit élément sensible au champ magnétique (14, 27) dudit au moins un organe de fermeture (10, 20).

2. Machine-outil (1) selon la revendication 1, **caractérisée en ce que** ledit élément sensible au champ magnétique (14, 27) est constitué d'un matériau ferreux.

3. Machine-outil (1) selon l'une quelconque des revendications précédentes, **caractérisée en ce qu'**une pluralité de rainures (7) sont formées dans ledit support (6) pour loger, en utilisation, des éléments d'étanchéité.

4. Machine-outil (1) selon l'une quelconque des revendications précédentes, **caractérisée en ce qu'**au moins un évidement (11, 21) est formé dans ledit support (6) au niveau de ladite au moins une ouverture (9, 23), ledit au moins un évidement (11, 21) étant configuré pour loger entièrement ledit au moins un organe de fermeture (10, 20).

5. Machine-outil (1) selon l'une quelconque des revendications précédentes, **caractérisée en ce que** ledit élément de clapet (12) est mobile en rotation entre ladite position de fermeture et ladite position d'ouverture.

6. Machine-outil (1) selon la revendication 5, **caractérisée en ce que** ledit élément de clapet (12) est raccordé de manière rotative avec ledit support (6) au niveau d'une région d'extrémité dudit élément de clapet (12).

7. Machine-outil (1) selon l'une quelconque des revendications 1 à 4, **caractérisée en ce que** ledit élément de clapet (26) est mobile en translation entre ladite position de fermeture et ladite position d'ouverture.

8. Machine-outil (1) selon la revendication 7, **caractérisée en ce que** ledit au moins un organe de fermeture (20) comprend une plaque (24) où une seconde ouverture (25) est formée, ladite plaque (24) pouvant être fixée audit support (6) de sorte que ladite seconde ouverture (25) soit en communication avec ladite au moins une ouverture (23), et **en ce que** ledit élément de clapet (26) est couplé de manière coulissante à ladite plaque (24) au niveau de ladite seconde ouverture (25).

9. Machine-outil (1) selon l'une quelconque des revendications précédentes, **caractérisée en ce qu'**elle comprend un capteur inductif pouvant être monté sur ladite tête opérationnelle (5), ledit capteur inductif étant configuré de sorte que ledit capteur inductif détecte si ledit élément de clapet (12, 26) se trouve dans ladite position de fermeture ou dans ladite position d'ouverture lorsque ladite tête opérationnelle (5) est placée sensiblement au-dessus de ladite au moins une ouverture (9, 23).
